(19) Europäisches Patentamt

European Patent Office

Office européen des brevets

(11) Veröffentlichungsnummer: **0 235 511 B1**

(12) **EUROPÄISCHE PATENTSCHRIFT**

(45) Veröffentlichungstag der Patentschrift: **02.01.92**

(21) Anmeldenummer: **87100387.7**

(22) Anmeldetag: **14.01.87**

(51) Int. Cl.⁵: **B23B 29/04**

(54) **Kupplung zur Verbindung von Werkzeugkopf und Werkzeughalter an Werkzeugmaschinen mit einem wechselbaren Werkzeugkopf.**

(30) Priorität: **25.01.86 DE 3602247**

(43) Veröffentlichungstag der Anmeldung:
**09.09.87 Patentblatt 87/37**

(45) Bekanntmachung des Hinweises auf die Patenterteilung:
**02.01.92 Patentblatt 92/01**

(84) Benannte Vertragsstaaten:
**CH FR GB IT LI**

(56) Entgegenhaltungen:
**EP-A- 0 155 539**
**DE-A- 2 736 412**
**GB-A- 2 070 473**
**GB-A- 2 154 479**
**US-A- 3 600 777**

(73) Patentinhaber: **Fried. Krupp Gesellschaft mit beschränkter Haftung**
**Altendorfer Strasse 103**
**W-4300 Essen 1(DE)**

(72) Erfinder: **Tack, Hans**
**Schopenhauerstrasse 20**
**W-5620 Velbert 1(DE)**

(74) Vertreter: **Vomberg, Friedhelm, Dipl.-Phys.**
**Schulstrasse 8**
**W-5650 Solingen 1(DE)**

## Beschreibung

Die Erfindung bezieht sich auf einen Werkzeughalter mit einem wechselbaren Werkzeugkopf nach dem Oberbegriff des Anspruches 1, siehe DE-A-2 736 412.

Die Aufgabe, an Werkzeugmaschinen einen möglichst schnellen Werkzeugwechsel vornehmen zu können, ist mit zunehmenden Rationalisierungsbemühungen immer bedeutender geworden. Zu Ihrer Lösung sind schon verschiende Kupplungssysteme vorgeschlagen worden, bei denen die lösbare Kupplung zwischen einem auswechselbaren Werkzeugkopf und einem Werkzeughalter darin besteht, daß der Werkzeughalter einen Aufnahmezapfen besitzt, auf dem der Werkzeugkopf mit einer dem Aufnahmezapfen entsprechenden Aufnahmebohrung eingesetzt wird. Nach dem Aufsetzen auf den Werkzeughalter wird der Werkzeugkopf mittels geeigneter Spannelemente arretiert, die meist durch eine axial zum Werkzeughalter verschiebbare Zugstange betätigt werden.

Die DE-A-27 36 412 beschreibt einen Werkzeughalter mit einer Aufnahmebohrung, in der ein entsprechend ausgebildeter Aufnahmezapfen eines Werkzeugkopfes spannbar ist. Der Zapfen weist eine vom rückwärtigen Ende aus einwärts verlaufende axiale Bohrung und diese schneidende radiale Bohrungen auf, in denen Kugeln als Spannelemente angeordnet sind, während in der axialen Bohrung am rückwärtigen Ende der Spannelemente ein Betätigungselement in Form einer weiteren Kugel angeordnet ist, wobei durch axiale Bewegung des Betätigungselementes die Kugeln radial bewegt werden. Bei einer radialen Auswärtsbewegung kommen die genannten Kugeln im Spannzustand an eine Schulter des Werkzeughalters.

Der Aufnahmezapfen des Werkzeugkopfes wird in der Regel zylindrisch, aber auch konisch ausgeführt. Die konische Ausführung hat den Vorteil, daß sich der Aufnahmezapfen des Werkzeugkopfes leicht in die entsprechende Aufnahmebohrung des Werkzeughalters einsetzen läßt. Die Selbsthemmung von Kegelverbindungen ist jedoch für das schnelle Wechseln des Werkzeugkopfes nachteilig. Auch hat es sich gezeigt, daß bei Verwendung einer kegeligen Aufnahmeverbindung die bei hochbelasteten Werkzeugen erforderliche hohe Steifigkeit und Positionierungsgenauigkeit nur erreicht werden kann, wenn neben der konischen und damit spielfreien radialen Führung noch eine axiale Anlage zwischen Werkzeugkopf und Grundhalter vorhanden ist. Die gleichzeitige Festlegung des Werkzeugkopfes mittels einer Kegelverbindung un einer Plananlage ist bisher jedoch nur dadurch möglich gewesen, daß man verformte Zwischenstücke zwischen Werkzeugkopf und der Aufnahme des Grundhalters vorgesehen hat oder daß man beim Schließvorgang des Kupplungssystems eine Verformung des Materials an den Aufnahmeelementen selbst, also am Aufnahmezapfen und/oder der Aufnahmebohrung, zugelassen hat. Um eine solche Verformung zu erreichen, sind aber außerordentlich hohe Spann- und Abstoßkräfte erforderlich, die mit der Betätigungsvorrichtung bewältigt werden müssen. Die Teile derselben müssen entsprechend dimensioniert sein und benötigen, da sie sich nur schwer unterbringen lassen, entsprechend viel Raum.

Aufgabe der vorliegenden Erfindung ist es, eine Kupplung zwischen Werkzeugkopf und Werkzeughalter zu schaffen, die nicht nur eine sichere spielfreie radiale Führung des Werkzeugkopfes im Werkzeughalter ermöglicht und die erforderliche Steifigkeit der Verbindung sicherstellt, sondern die auch einfach und raumsparend aufgebaut ist. Außerdem soll sie sich sehr leicht verriegeln und entriegeln lassen.

Diese Aufgabe wird durch einen Werkzeughalter mit einem wechselbaren Werkzeugkopf gelöst, der die Merkmale des Anspruches 1 aufweist. Eine solche Verbindung ist recht einfach aufgebaut, sie kommt mit wenigen beweglichen Teilen aus und schafft eine sichere und feste Verbindung zwischen dem wechselbaren Werkzeugkopf und dem Werkzeughalter. Mit Hilfe der Kupplung nach der Erfindung ist es möglich, Werkzeugköpfe schnell und ohne Gefahr der Betriebsstörung zu wechseln.

Zweckmäßige vorteilhafte Weiterbindungen des Erfindungsgegenstandes sind in den Unteransprüchen gekennzeichnet.

Die Zeichnung zeigt Ausführungsbeispiele des Erfindungsgegenstandes, und zwar zeigt:

Fig. 1    die Kupplung zwischen Werkzeugkopf und Werkzeughalter einer Drehmaschine, teilweise im Längsschnitt im gespannten und verriegelten Zustand,

Fig. 2    die Kupplung nach Fig. 1 im entriegelten Zustand,

Fig. 3    einen Schnitt nach der Linie I-I in Fig. 1 und

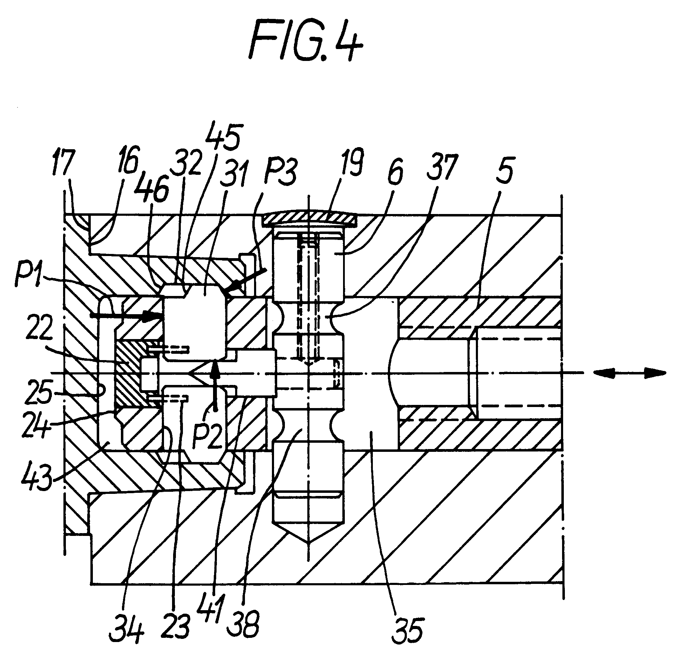

Fig. 4    eine vergrößerte Darstellung der Verriegelungsteile der Kupplung.

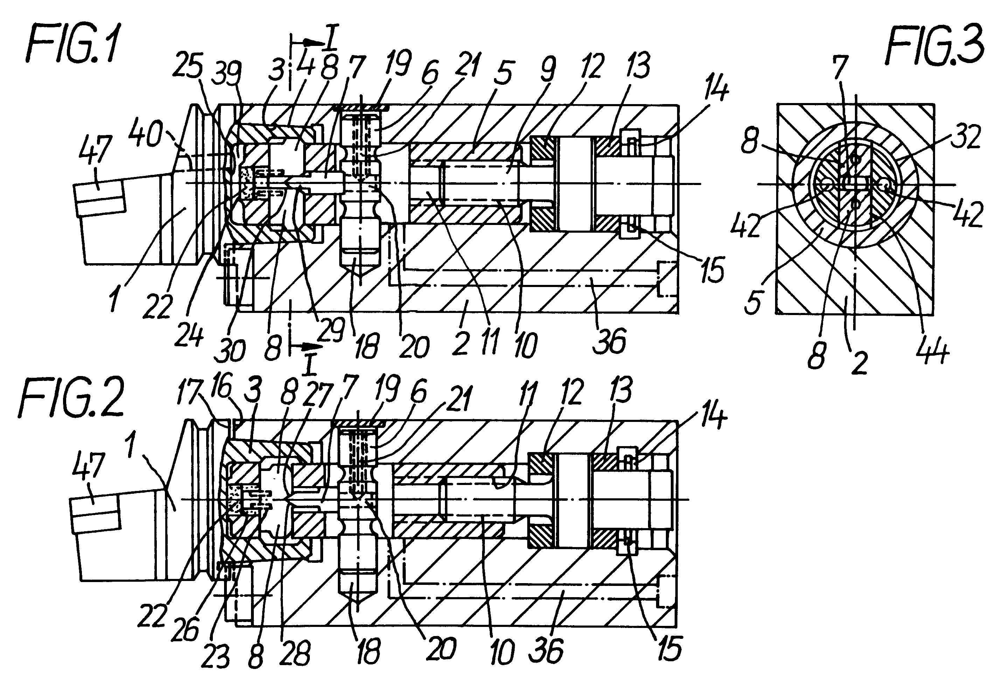

In den Fig. 1 und 2 ist der Werkzeugkopf mit 1 bezeichnet, der von Hand oder mittels einer nicht dargestellten Greifereinrichtung auch automatisch dem Werkzeughalter 2 zugeführt werden kann. Dabei wird der konische Spannzapfen 3 des Werkzeugkopfes 1 in eine entsprechende Aufnahmebohrung 4 des Werkzeughalters 2 eingeführt. Im Werkzeughalter 2 ist eine Spanneinrichtung vorgesehen, die im wesentlichen aus dem Spannschieber 5, dem Stehbolzen 6, den aus dem Zapfen 7 des Stehbolzens 6 und den Spannbacken 8 bestehenden Spreizelementen sowie der Spannschraube 9 besteht. Die Spannschraube 9 wirkt mit ihrem Gewinde 10 mit einem in der Bohrung 11 des Spannschiebers 5 vorgesehenen Gegengewinde zusammen. Mit 12 und 13 sind Lagerscheiben bezeichnet, in denen die Spannschraube 9 geführt ist. Die Spannschraube ist durch Segmente 14 gesichert, die durch einen Spannring 15 gehalten werden.

Durch Drehung der Spannschraube 9 wird der Spannschieber 5 in axialer Richtung bewegt, und zwar bei Linksdrehung in Richtung auf den Werkzeugkopf, bei Rechtsdrehung in entgegengesetzter Richtung.

Mit 16 ist eine radiale Planfläche bezeichnet, die an der Stirnseite des Werkzeughalters 2 angeordnet ist und die mit einer entsprechenden Gegenfläche 17 des Werkzeugkopfes zusammenwirkt.

Der Stehbolzen 6 ist in einer im Grundhalter 2 quer zu dessen Längsachse vorgesehenen Sackbohrung 18 angeordnet, die durch eine Kappe 19 abgedeckt ist. Der Zapfen 7 ist in der Längsachse des Werkzeughalters senkrecht zur Achse des Stehbolzens 6 in eine entsprechende Bohrung 20 des Stehbolzens 6 eingesetzt und durch eine Sicherungsschraube 21 gesichert.

Im vorderen Teil des Spannschiebers 2 ist in einer Längsbohrung 26 des Spannschiebers 5 ein elastisches Element 22 vorgesehen. In dieses greifen in die Spannbacken 8 eingesetzte Sicherungsstifte 23 ein, die zum Festhalten der Spannbacken 8 des Verriegelungssystems dienen.

Der Funktionsablauf der dargestellten Werkzeugkupplung ist folgender:
Wird der Werkzeugkopf 1 dem Werkzeughalter 2 zugeführt, so gelangt sein konischer Aufnahmezapfen 3 in die entsprechende Bohrung des Grundhalters 2. Dabei gelangt der vordere Teil des Spannschiebers 5 in die Sackbohrung 43 im Aufnahmezapfen 3 des Werkzeugkopfes 1. Sobald die Stirnfläche 24 des Spannschiebers 5 mit der Grundfläche 25 der Sackbohrung 43 des Werkzeugkopfes 1 zur Anlage gelangt, wird die Rechtsdrehung der Spannschraube 9 des Spannschiebers 5 eingeleitet, der dadurch in Richtung auf die Spannschraube 9 zu, also vom Werkzeugkopf 1 weg, bewegt wird. Dies hat zur Folge, daß die Spannbacken 8, die in entsprechenden Ausnehmungen 44 des Spannschiebers 5 radial beweglich angeordnet sind, mit ihren Fangschrägen 27 auf die geometrisch entsprechend ausgebildete Spitze 28 des Zapfens 7 auftreffen. Dadurch werden sie bei der weiteren Bewegung des Spannschiebers radial auseinandergedrückt, bis die parallelen Flächen 29 des Zapfens 7 mit den Fußflächen 30 der Spannbacken 8 zusammentreffen. Der Zapfen 7 wirkt damit als Distanzhalter und hindert die Spannbacken 8 daran zurückzugleiten.

Durch das radiale Verschieben der Spannbacken 8 werden die Nasen 31 derselben in eine Ringnut 32 gedrückt, die in der Sackbohrung 43 im Spannzapfen 3 angeordnet ist. Dadurch ergibt sich zwischen Spannschieber 5 und Spannzapfen 3 des Werkzeugkopfes 1 eine formschlüssige Verbindung, durch die bei weiterer Betätigung der Spannschraube 9 der Werkzeugkopf 1 weitere in die Aufnahmebohrung des Grundhalters 2 gezogen wird, bis der Spannzapfen 3 spielfrei in der Bohrung 4 anliegt. Wird die Spannschraube 9 weiter betätigt, so verformt sich das Material der Wandung der Bohrung 4 und auch der Spannzapfen 3 im letzten Bereich der Kegelverbindung, bis auch die Gegenfläche 17 des Werkzeugkopfes 1 an der Planfläche 16 des Werkzeughalters 2 anliegt. Dazu ist nur eine ganz geringe axiale Bewegung des Spannschiebers 5 nötig, die im Bereich weniger zehntel Millimeter liegt und die abhängig vom gewählten Steigungsmaß des verwendeten Kegels ist.

Die Kräfte ($P_3$), die hierbei auf die Spannbacken 8 wirken, werden in axialer Richtung ($P_1$) von der Führungsfläche 34 des Spannschiebers 5 und in radialer Richtung ($P_2$) von dem als Dinstanzstück wirkenden Zapfen 7 aufgenommen. Die axiale Beweglichkeit des im Querschnitt zylindrisch ausgebildeten Spannschiebers 5 ist durch ein Langloch 35 im Spannschieber 5 gewährleistet, durch das der Stehbolzen 6 hindurchgeführt ist. Das Langloch 35 hat außerdem die Aufgabe, Kühlflüssigkeit aufzunehmen, die ihm durch eine Bohrung 36 im Werkzeughalter 2 zugeführt wird. Die Kühlflüssigkeit wird von dem Langloch über die Nuten 37, 38 im Stehbolzen 6 und die Bohrungen 42 im Spannschieber 5 in den freien Raum 39 des Werkzeugkopfes 1 weitergeführt, aus dem sie schließlich durch die Bohrung 40 austreten kann, die dort in der Nähe der Werkzeugschneide 47 mündet.

Das Entriegeln und Abstoßen des Werkzeugkopfes 1 wird durch Linksdrehung der Spannschraube 9 eingeleitet und herbeigeführt. Der Spannschiebe bewegt sich dabei in Richtung des Werkzeugkopfes 1, wobei der im Stehbolzen 6 gehaltene und in der Bohrung 41 des Spannschiebers 5 geführte Zapfen 7 die Spannbacken 8 entsperrt. Spätestens dann, wenn die Flächen 45 der Spannbacken 8 auf die abgeschrägten Seitenflanken 46 der Nut 32 auftreffen, bewegen sie sich wieder radial in Richtung auf die Mittelachse des Werkzeughalters 2, wodurch die Entriegelung des Werkzeugkopfes 1 herbei geführt wird.

Wenn die Spannbacken 8 in ihre Ursprungslage zurückgekehrt sind, in der sie mittels der Sicherungsstifte 23 in elastischen Elementen 22 gehalten werden, trifft der Spannschieber 5 mit seiner Stirnfläche 24 auf die Grundfläche 25 der Sackbohrung 43 des Werkzeugkopfes 1 und drückt diesen aus der kegeligen Aufnahmebohrung 4 des Werkzeughalters 2 hinaus.

Kupplungen der beschiebenen Art eignen sich besonders für kegelige und im Bereich der Selbsthemmung liegende Verbindungen zwischen Werkzeugkopf und Werkzeughalter. Sie können aber auch für Zylindrische oder kombinierte (Kegel/Zylinder)-Werkzeugaufnahmen verwendet werden.

## Patentansprüche

1. Werkzeughalter (2) mit einem wechselbaren Werkzeugkopf (1), der mit einem Aufnahmezapfen (3) und einem ringförmigen Anlagebund (17) versehen ist, die mit einer entsprechenden Aufnahmebohrung und einer ringförmigen Gegenfläche (16) des Werkzeughalters (2) zusammenwirken, wobei der Werkzeughalter (2) und der Werkzeugkopf mittels Spannelementen, die über eine Spannvorrichtung betätigt werden, so verriegelbar sind, daß der Anlagebund (17) des Werkzeugkopfes (1) an der Gegenfläche (16) des Werkzeughalters (2) anliegt, **dadurch gekennzeichnet,** daß im Werkzeughalter (2) ein in dessen Längsrichtung beweglicher Spannschieber (5) vorgesehen ist, dessen Stirnfläche (24) mit der Planfläche (25) einer Sackbohrung (43) im Werkzeugkopf (1) zusammenwirkt und in dessen vorderem Teil radial bewegliche Spannbacken (8) vorgesehen sind, die mit einem mit dem Werkzeughalter (2) in einer fixierten Lage fest verbundenen Zapfen (7) in der Weise zusammenwirken, daß durch Zurückschieben des Spannschiebers in Richtung vom Werkzeugkopf weg die Spannbacken (8) auf den Zapfen aufgeschoben werden und diese eine Nut (32) in der Aufnahmebohrung (43) des Werkzeugkopfes (1) hintergreifen und diesen in der Endstellung so verriegeln, daß sein Anlagebund (17) an der Gegenfläche (16) des Werkzeughalters (2) fest anliegt.

2. Werkzeughalter nach Anspruch 1, dadurch gekennzeichnet, daß der Aufnahmezapfen zumindest teilweise kegelartig ausgebildet ist.

3. Werkzeughalter nach Anspruch 1 oder 2, dadurch gekennzeichnet, daß der Zapfen (7) in einem im Werkzeughalter gehaltenen Stehbolzen (6) befestigt und in der Längsachse des Werkzeughalters (2) angeordnet ist und an seiner Spitze Schrägen besitzt, die mit den Fußflächen (30) der Spannbacken (8) im Spannschieber (5) zusammenwirken.

4. Werkzeughalter nach Anspruch 2, dadurch gekennzeichnet, daß die Anzahl der Schrägen an der Spitze des Zapfens (7) des Stehbolzens (6) der Anzahl der Spannbacken (8) im Spannschieber (5) entspricht.

5. Werkzeughalter nach Anspruch 2, dadurch gekennzeichnet, daß die Spitze des Zapfens (7) kegelig ausgebildet ist.

6. Werkzeughalter nach einem der vorhergehenden Ansprüche, dadurch gekennzeichnet, daß im konischen Aufnahmezapfen (3) des Werkzeugkopfes (1) eine Sackbohrung (43) vorgesehen ist, die in einer Planfläche (25) endet, die mit der Stirnfläche (24) des Spannschiebers (5) zusammenwirkt.

7. Werkzeughalter nach Anspruch 2, dadurch gekennzeichnet, daß im Spannschieber (5) ein Langloch (35) vorgesehen ist, durch das sich der Stehbolzen (6) hindurch erstreckt.

8. Werkzeughalter nach einem der vorhergehenden Ansprüche, dadurch gekennzeichnet, daß in der Sackbohrung im Aufnahmezapfen (3) des Werkzeugkopfes (1) eine Ringnut (32) vorgesehen ist, in die die Spannbacken (8) hineingedrückt werden, wenn sie beim Verschieben des Spannschiebers (5) auf den Zapfen (7) auftreffen.

9. Werkzeughalter nach Anspruch 7, dadurch gekennzeichnet, daß die Seitenflächen (46) der Ringnut (32) in der Sackbohrung (43) des Aufnahmezapfens (3) des Werkzeughalters (2) abgeschrägt sind.

10. Werkzeughalter nach einem der vorhergehenden Ansprüche, dadurch gekennzeichnet, daß der Spannschieber (5) durch eine in Längsrichtung des Werkzeughalters (2) angeordnete Schraube (9) betätigt wird.

11. Werkzeughalter nach einem der Ansprüche 1 bis 7, dadurch gekennzeichnet, daß der Spannschieber (5) durch ein im Werkzeughalter (2) vorgesehenes hydraulisches Element betätigbar ist.

12. Werkzeughalter nach einem der vorhergehenden Ansprüche, dadurch gekennzeichnet, daß die Spannbacken (8) mit Stiften (23) versehen sind, die mit einem im vorderen Teil des Spannschiebers (5) angeordneten elastischen Element (22) zusammenwirken.

13. Werkzeughalter nach einem der vorhergehenden Ansprüche, dadurch gekennzeichnet, daß im Werkzeughalter (2) ein Kanal (36) vorgesehen ist, der mit im Spannschieber (5) vorgesehenen Kanälen (42) in Verbindung steht und über den dem Werkzeugkopf (1) Kühlmittel zugeführt wird, das in der Nähe der Werkzeugschneide (47) austritt.

14. Werkzeughalter nach einem der vorhergehenden Ansprüche, dadurch gekennzeichnet, daß der Spannschieber (5) im Querschnitt zylindrisch ausgebildet und in einer Längsachse des Werkzeughalters (2) angeordnet ist.

15. Werkzeughalter nach Anspruch 13, dadurch gekennzeichnet, daß das den Spannschieber (5) betätigende Element in der Längsachse des Spannschiebers (5) angeordnet ist.

**Claims**

1. A tool holder (2) having an interchangeable tool head (1) having a receiving pin (3) and an annular bearing collar (17) which cooperates with a matching receiving bore and an annular matching surface (6) of the tool holder (2), the tool holder (2) and the tool head being so lockable by means of clamping elements actuated via a clamping device that the bearing collar (17) of the tool head (1) bears against the matching surface (16) of the tool holder (2), characterized in that disposed in the tool holder (2) is a clamping slide (5) which can move in the longitudinal direction of the tool holder and whose end face (24) cooperates with the flat face (25) of a blind bore (43) in the tool head (1) and in whose front portion radially movable clamping jaws (8) are provided which so cooperate with a pin (7) rigidly connected in a fixed position to the tool holder (2) that the sliding back of the clamping slide in the direction away from the tool head slips the clamping jaws (8) on to the pin, the clamping jaws engaging behind a groove (32) in the receiving bore (43) of the tool head (1) and so locking the tool head in the end position that its bearing collar (17) bears firmly against the matching surface (16) of the tool holder (2).

2. A tool holder according to claim 1, characterized in that the receiving pin is constructed at least partially conical.

3. A tool holder according to claims 1 or 2, characterized in that the pin (7) is attached in a stay bolt (6) retained in the tool holder and is disposed in the longitudinal axis of the tool holder (2) and has at its tip inclined surfaces which cooperate with the base surfaces (30) of the clamping jaws (8) in the clamping slide (5).

4. A tool holder according to claim 2, characterized in that the number of inclined surfaces at the tip of the pin (7) of the stay bolts (6) corresponds to the number of clamping jaws (8) in the clamping slide (5).

5. A tool holder according to claim 2, characterized in that the tip of the pin (7) is constructed conical.

6. A tool holder according to one of the preceding claims, characterized in that the conical receiving pin (3) of the tool head (1) is formed with a blind bore (43) terminating in a flat surface (25) which cooperates with the end face (24) of the clamping slide (5).

7. A tool holder according to claim 2, characterized in that the clamping slide (5) is formed with a slot (35) through which the stay bolt (6) extends.

8. A tool holder according to one of the preceding claims, characterized in that in the blind bore the receiving pin (3) of the tool head (1) is formed with an annular groove (32) into which the clamping jaws (8) are forced when they impinge on the pin (7) during the sliding of the clamping slide (5).

9. A tool holder according to claim 7, characterized in that the lateral surfaces (46) of the annular groove (32) in the blind bore (43) in the receiving pin (3) of the tool holder (2) are chamfered.

10. A tool holder according to one of the preceding claims, characterized in that the clamping slide (5) is actuated by a screw (9) disposed in the longitudinal direction of the tool holder (2).

11. A tool holder according to one of claims 1 to 7, characterized in that the clamping slide (5) can be actuated by a hydraulic element provided in the tool holder (2).

12. A tool holder according to one of the preceding claims, characterized in that the clamping jaws (8) have pins (23) which cooperate with a resilient element (22) disposed in the front part of the clamping slide (5).

13. A tool holder according to one of the preceding claims, characterized in that the tool holder (2) is formed with a channel (36) which is connected to channels (42) provided in the clamping slide (5) and via which coolant emerging adjacent the tool cutting edge (47) is fed to the tool head (1).

**14.** A tool holder according to one of the preceding claims, characterized in that the clamping slide (5) is cylindrical in cross-section and disposed in a longitudinal axis of the tool holder (2).

**15.** A tool holder according to claim 13, characterized in that the element actuating the clamping slide (5) is disposed in the longitudinal axis of the clamping slide (5).

**Revendications**

**1.** Porte-outil (2) avec une tête d'outil interchangeable (1), qui est munie d'un nez de centrage (3) et d'un collet annulaire (17) qui agissent avec un perçage de positionnement correspondant et une contre-surface annulaire (16) du porte-outil (2), le porte-outil (2) et la tête d'outil étant verrouillables au moyen d'éléments commandés par l'intermédiaire d'un dispositif de serrage, de telle sorte que le collet (17) de la tête d'outil (1) est appliqué à la contre-surface (16) du porte-outil (2), caractérisé en ce que, dans le porte-outil (2), est prévu un coulisseau de serrage (5), mobile dans le sens longitudinal, dont la surface extérieure (24) agit avec la surface transversale (25) d'un trou borgne (43) dans la tête d'outil (1) et dans la partie avant duquel sont prévues radialement des mâchoires de serrage mobiles (8) qui agissent avec un tourillon (7), relié de façon fixe au porte-outil (2), dans une position fixée, de sorte que, de par le recul du coulisseau de serrage en direction de la tête d'outil, les mâchoires de serrage (8) soient poussées sur le tourillon et que celles-ci coopèrent avec une rainure (32) dans le perçage de positionnement (43) de la tête d'outil (1) et bloquent celle-ci dans la position finale, de sorte que son collet (17) est appliqué de façon fixe à la contre-surface (16) du porte-outil (2).

**2.** Porte-outil selon la revendication 1, caractérisé en ce que le nez de centrage est conçu, au moins partiellement, de façon conique.

**3.** Porte-outil selon les revendications 1 ou 2, caractérisé en ce que le tourillon (7) est fixé dans un goujon fileté (6), maintenu dans le porte-outil et disposé dans l'axe longitudinal de ce porte-outil (2) et qu'il possède à sa pointe des biseaux qui agissent avec les embases (30) des mâchoires de serrage (8), dans le coulisseau de serrage (5).

**4.** Porte-outil selon la revendication 2, caractérisé en ce que le nombre de biseaux à la pointe du tourillon (7) du goujon fileté (6) correspond à celui des mâchoires de serrage (8) dans le coulisseau de serrage (5).

**5.** Porte-outil selon la revendication 2, caractérisé en ce que la pointe du tourillon (7) est conçue de façon conique.

**6.** Porte-outil selon l'une des revendications précédentes, caractérisé en ce que, dans le nez de centrage conique (3) de la tête d'outil (1), est prévu un trou borgne (43) qui se termine dans une surface plane (25) qui agit avec la surface extérieure (24) du coulisseau de serrage (5).

**7.** Porte-outil selon la revendication 2, caractérisé en ce que, dans le coulisseau de serrage (5) est prévu un trou oblong (35) que traverse le goujon fileté (6).

**8.** Porte-outil selon l'une des revendications précédentes, caractérisé en ce que, dans le trou borgne (43) du nez de centrage (3) de la tête d'outil (1), est prévue une rainure pour un anneau de retenue (32), dans laquelle sont appliquées les mâchoires de serrage (8) lorsqu'elles s'appuient contre le tourillon (7) lors du déplacement du coulisseau de serrage (5).

**9.** Porte-outil selon la revendication 7, caractérisé en ce que les surfaces latérales (46) de la rainure pour l'anneau de retenue (32) sont biseautées dans le trou borgne (43) du nez de centrage (3) du porte-outil (2).

**10.** Porte-outil selon l'une des revendications précédentes, caractérisé en ce que le coulisseau de serrage (5) est commandé par une vis (9), disposée dans le sens longitudinal du porte-outil (2).

**11.** Porte-outil selon l'une des revendications 1 à 7, caractérisé en ce que le coulisseau de serrage (5) est actionnable par un élément hydraulique, prévu dans le porte-outil (2).

**12.** Porte-outil selon l'une des revendications précédentes, caractérisé en ce que les mâchoires de serrage (8) sont munies de tiges (23) qui agissent avec un élément élastique (22) disposé sur la partie avant du coulisseau de serrage (5).

**13.** Porte-outil selon l'une des revendications précédentes, caractérisé en ce que, dans le porte-outil (2), est prévu un canal (36) qui est relié à des canaux (42) prévus dans le coulisseau de serrage (5) et par l'intermédiaire duquel un produit réfrigérant, qui sort à proximité du tranchant d'outil (47), est amené à la tête d'outil (1).

14. Porte-outil selon l'une des revendications précédentes, caractérisé en ce que le coulisseau de serrage (5) est cylindrique dans sa section transversale et disposé dans l'axe longitudinal du porte-outil (2).

15. Porte-outil selon la revendication 13, caractérisé en ce que l'élément actionnant le coulisseau de serrage (5) est disposé dans l'axe longitudinal de celui-ci (5).

FIG.1

FIG.2

FIG.3

EP 0 235 511 B1

# FIG.4